# DEMANDE DE BREVET EUROPEEN

(11) **EP 0 770 322 A1**
(43) Date de publication de la demande: **02.05.1997**
(21) Numéro de dépôt: 96402259.4
(22) Date de dépôt: 24.10.1996
(51) Int. Cl.: A01D 45/26

(54) **Système de cueillette de choux**

(30) Priorité: 26.10.1995 FR 9512667
(71) Demandeur: Abc Metal Sarl, 80131 Harbonnieres (FR)
(72) Inventeur: Truffaux, Hubert, 80440 Boves (FR)
(74) Mandataire: Debay, Yves

(57) **Abrégé**

La présente invention concerne un système de cueillette de choux caractérisé en ce qu'il comporte au moins une voie (1, 2) de cueillette qui est constituée par :
des moyens (12, 11 ; 21, 22) de centrer et redresser les plants de choux;
des guides (23, 24 ; 13, 14) d'accompagnement des plantes ;
des moyens (15, 25) de sectionnement des feuilles et des tiges des choux à une hauteur réglable par rapport au sol, l'ensemble étant monté sur un châssis pourvu de moyens réglables (29) de conservation d'une garde au sol.

## Description

La présente invention concerne un système de cueillette de choux.

Le problème de la culture des choux est que la cueillette de ces derniers jusqu'à présent n'a pas pu être automatisée sans endommager les choux qui sont très fragiles ce qui les rend ensuite impropres à la consommation ou à la mise en conserve. De plus le sectionnement des tiges, du fait qu'au départ la tige du chou peut s'infléchir vers le sol et donc se décaler par rapport au rang de plantation, risque d'être fait à des endroits inadaptés. Le but de l'invention est de pallier ces inconvénients.

Ce but est atteint par le fait que le système de cueillette de choux comporte au moins une voie de cueillette qui est constituée par:
des moyens de centrer et redresser les plants de choux ;
des guides d'accompagnement des plantes ;
des moyens de sectionnement des feuilles et des tiges des choux à une hauteur réglable par rapport au sol, l'ensemble étant monté sur un châssis pourvu de moyens réglables de conservation d'une garde au sol.

Selon une autre particularité le système comporte au-dessus des moyens de sectionnement des moyens de rupture des feuilles et des moyens de ventilation pour éliminer les feuilles avant convoyage par un tapis convoyeur.

Selon une autre particularité les moyens de centrage et de redressement sont constitués par deux disques rotatifs tournant dans le sens d'avalement par rapport à l'entrée évasée des moyens d'accompagnement.

Selon une autre particularité les disques sont inclinés de façon que l'axe de symétrie confondu avec l'axe de rotation des disques flasques soit d'une part incliné vers l'avant et d'autre part vers l'axe de symétrie de la voie de cueillette.

Selon une autre particularité les moyens de centrage et de redressement sont constitués par deux troncs de cône rotatifs, de faible épaisseur, tournant dans le sens d'avalement par rapport à l'entrée évasée des moyens d'accompagnement, et dont l'axe de rotation, confondu avec l'axe de symétrie est incliné de façon que la surface externe du tronc de cône soit tangente, à proximité de chaque voie, d'un plan vertical parallèle à l'axe de symétrie de chaque voie.

Selon une autre particularité l'angle d'inclinaison selon les deux directions est réglable dans une plage de 0 à 30 degrés.

Selon une autre particularité les moyens d'accompagnement sont constitués de deux rails convergeant de l'axe de symétrie des disques vers le chemin d'accompagnement qui se prolonge par un tronçon parallèle au-dessus duquel un tapis rotatif est entraîné dans le sens d'avalement.

Selon une autre particularité les moyens de sectionnement sont constitués par un disque de coupe entraîné dans le sens d'avalement et disposé sur chaque voie de cueillette.

Selon une autre particularité les moyens de rupture des feuilles sont constitués par un guide disposé parallèlement à la voie au-dessus des moyens de sectionnement et un ensemble de bandes de pression disposées à hauteur du guide sont entraînées en rotation en sens inverse du sens de la roue de sectionnement.

Selon une autre particularité les bandes sont tendues entre un premier et un second galets dont le premier galet placé à l'avant est réglable en position et un troisième galet dit presseur disposé entre le premier et le second galet et à proximité du guide est monté sur des moyens élastiques pour définir une partie de trajet parallèle à la voie et une partie de trajet convergeante entre le premier galet et le troisième galet.

Selon une autre particularité des moyens de ventilation sont disposés sous et sur le côté de la voie de guidage, avant la sortie ou/et à la sortie des moyens de rupture des feuilles, pour éliminer les feuilles avant l'arrivée des choux sur le tapis convoyeur.

Selon une autre particularité à la sortie du tapis de convoyage le système comporte un second dispositif d'effeuillage et un tapis élévateur vers une trémie de stockage.

Selon une autre particularité le système de cueillette comporte une pluralité de voies de cueillette.

Selon une autre particularité le système de réglage de la garde au sol est constitué de moyens de détection de la distance au sol et de moyens agissant sur le châssis de support des différents moyens du système pour faire varier la garde au sol en fonction du signal fournit par les moyens de détection.

Selon une autre particularité les moyens agissant sur le châssis de support pour faire varier la garde au sol sont hydrauliques.

Selon une autre particularité ces moyens sont mécaniques.

Selon une autre particularité les différents disques, tapis et éléments mobiles du système monté sur le châssis sont actionnés par un fluide fourni par au moins une pompe, entraînée par au moins un moteur.

Selon une autre particularité le système de cueillette de choux comporte au moins une voie de cueillette qui est constituée par:
des moyens de centrer et redresser les plants de choux;
des guides d'accompagnement des plantes ;
des moyens de sectionnement des feuilles et des tiges des choux à une hauteur réglable par rapport au sol, l'ensemble étant monté sur un châssis pourvu de moyens réglables de conservation d'une garde au sol;
les moyens de centrage et de redressement étant constitués par deux disques rotatifs tournant dans le sens d'avalement par rapport à l'entrée évasée des moyens d'accompagnement.

Selon une autre particularité, les moyens de centrage et de redressement sont constitués de deux courroies tendues chacune d'un côté de la voie, entre une poulie solidaire en rotation d'un disque rotatif tournant dans le sens d'avalement par rapport à l'entrée évasée des moyens d'accompagnement, et un galet, les courroies décrivant un étranglement en V à l'entrée de la machine.

Selon une autre particularité, le système comporte des moyens de hachage et d'élimination de la partie supérieure des feuilles des choux.

Selon une autre particularité les moyens de hachage et d'élimination de la partie supérieure des feuilles des choux sont constitués d'au moins un cylindre rotatif dans le sens d'avalement et pourvu, sur sa surface périphérique, de doigts picots tranchants dans le sens d'avalement, le cylindre étant disposé au-dessus des moyens de centrage et de redressement, l'axe du cylindre étant perpendiculaire à l'axe de symétrie de la voie de traitement.

Selon une autre particularité les disques sont constitués de tronc de cône se rétrécissant vers le sol, et pourvus sur leur surface périphérique de doigts picots, tranchants dans le sens de rotation, qui s'étendent perpendiculairement à cette surface périphérique.

Selon une autre particularité chaque disque de centrage et de redressement est entraîné en rotation par un arbre avec lequel il est solidaire, l'arbre s'étendant au-dessus du disque, son axe confondu avec l'axe de rotation du disque, chaque poulie étant centrée sur la base supérieure d'un disque, chaque galet étant maintenu parallèle sa poulie, et dans le plan de celle-ci, au moyen d'un bras, chaque bras s'étendant perpendiculairement au-dessus du galet, puis se courbant vers le disque et l'arrière de la voie.

Selon une autre particularité chaque bras peut pivoter autour d'un axe parallèle à l'arbre d'entraînement, pour déplacer le galet et faire varier l'angle entre la courroie et l'axe de symétrie de la voie, cette variation d'angle modifiant l'étranglement en V décrit par les deux courroies situées de part et d'autre de la voie.

Selon une autre particularité les moyens de centrage et de redressement sont inclinés de façon que la surface externe du tronc de cône des disques de centrage et de redressement soit tangente, à proximité de chaque voie, d'un plan vertical parallèle à l'axe de symétrie de chaque voie.

Selon une autre particularité des moyens de rupture de feuilles sont constitués de deux séries de bandes d'entraînement, sensiblement parallèles et disposées symétriquement, de part et d'autre de la voie, chacune de ces deux séries de bandes d'entraînement étant tendue entre un premier et un second galets dont le premier galet, placé à l'avant, est réglable en position, de façon à ce que la plante soit serrée entre les deux séries de bandes, les deux séries de bandes étant entraînées en rotation dans le sens d'avalement avec des vitesses différentes, et réglables.

Selon une autre particularité des moyens de rupture de feuilles sont constitués de deux séries de bandes d'entraînement, sensiblement parallèles et disposées symétriquement, de part et d'autre de la voie, chacune de ces deux séries de bandes d'entraînement étant tendues entre un premier et un second galets dont le premier galet, placé à l'avant, est réglable en position, de façon à ce que la plante soit serrée entre les deux séries de bandes, une des deux séries de bandes étant entraînée en rotation dans le sens inverse au sens d'avalement de la machine, l'autre série de bandes étant entraînée dans le sens d'avalement, la vitesse d'entraînement de chacune des deux séries de bandes étant réglable, la vitesse d'entraînement de la bande tournant dans le sens contraire au sens d'avalement étant inférieure à la vitesse de la bande tournant dans le sens d'avalement.

Selon une autre particularité un troisième galet presseur est placé entre au moins une des deux paires de galets tendeurs, à proximité de l'axe de symétrie de la voie, ces galets presseurs étant montés sur des moyens élastiques, de façon à exercer une pression sur la plante en la serrant entre les deux séries de bandes.

Selon une autre particularité les moyens de sectionnement sont placés à l'avant de la machine, sous les rails guides, le système de cueillette comportant, à l'arrière des rails guides, des moyens d'élévation des choux coupés jusqu'au dispositif de cassage et de rupture de feuilles, le système de cueillette comportant des moyens de soufflage disposés sur ou/et sous le tapis de convoyage, les moyens de soufflage évacuant les feuilles coupées sur un tapis incliné, les têtes de choux arrivées à l'extrémité du tapis de convoyage tombant sur un tapis d'évacuation des choux, le tapis d'évacuation des choux étant disposé sous les deux tapis précédents.

Selon une autre particularité les moyens de sectionnement sont placés à l'avant de la machine, sous les rails guides, le système de cueillette comportant des moyens de rupture des feuilles et des moyens de ventilation pour éliminer les feuilles avant convoyage par un tapis convoyeur, les moyens de rupture de feuilles et les moyens de ventilation étant disposés dans le prolongement des rails guides, à l'arrière de la machine.

Selon une autre particularité les moyens de détection de la distance au sol sont optiques ou/et mécaniques.

Selon une autre particularité les moyens de détection de la distance au sol sont hydrauliques.

Selon une autre particularité les moyens de détection de la distance au sol sont constitués d'une roue d'un tambour de jauge en appui sur le sol.

D'autres particularités et avantages de la présente invention apparaîtront plus clairement à la lecture de la description ci-après faite en référence aux dessins annexés dans lesquels :
la figure 1 représente une vue de dessus du schéma de principe du système de cueillette ;
la figure 2 représente une vue schématique de côté du système de cueillette de la figure 1.
La figure 3 représente une vue de dessus d'une voie de traitement, dans un autre mode de réalisation selon l'invention,
La figure 4 représente une vue en perspective d'un couple disque-galet qui tendent une courroie d'un coté de la voie de traitement dans les systèmes de cueillette des figures 3 et 5,
La figure 5 représente une vue de côté de la voie de traitement de la figure 3.

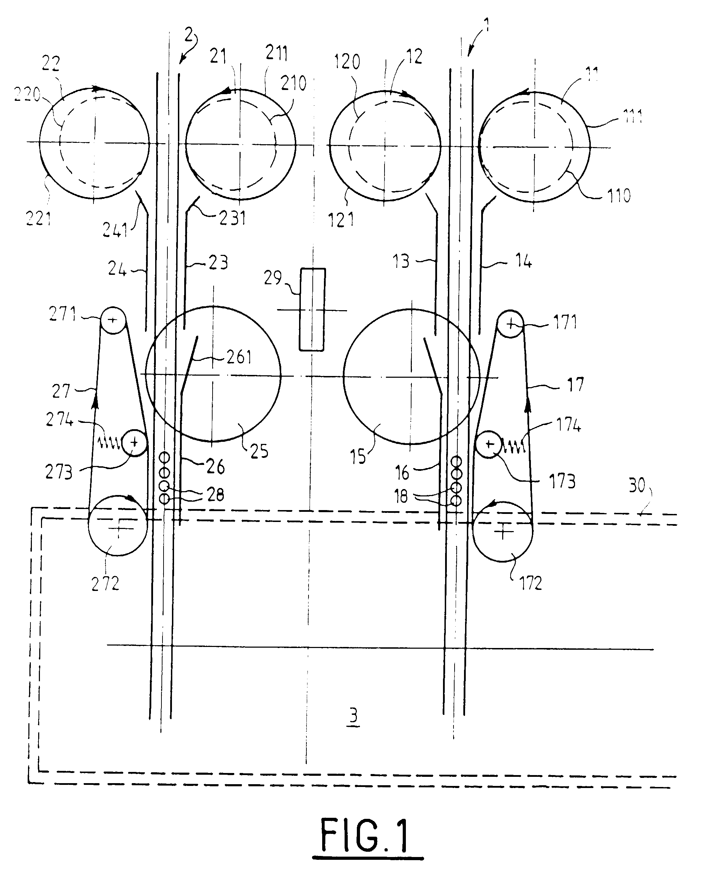

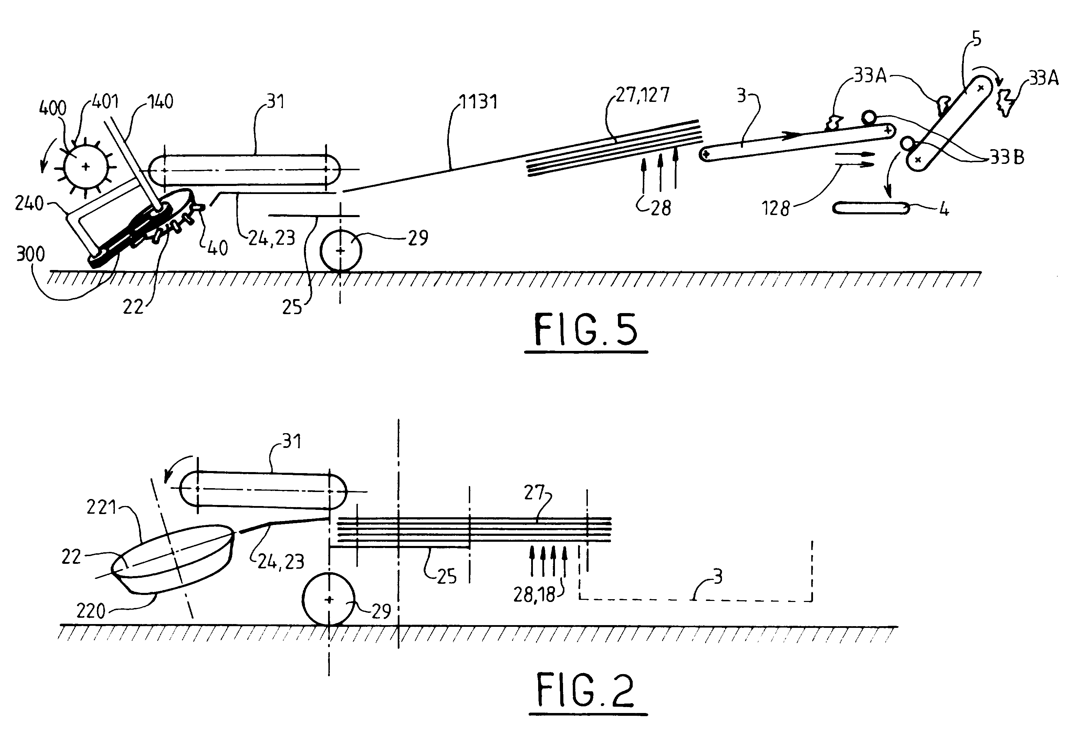

Le système de cueillette selon l'invention comporte un châssis non visible monté sur des moyens de sustentation par rapport au sol et, dans une variante de l'invention, articulé par rapport à un axe (30). Ce châssis comporte également une roue ou tambour de jauge (29), elle-même articulée par rapport au châssis pour venir en permanence en contact avec les dénivellations du sol. Les mouvements de cette roue de jauge sont détectés par des moyens mécaniques ou hydrauliques ou autre pour agir sur les moyens de sustentation du châssis de façon à maintenir une garde réglable entre les dispositifs de coupe des plantes et le sol. Cette roue de jauge (29) pourra être remplacée par des moyens optiques détectant le relief du sol, et coopérant avec des moyens mécaniques ou hydrauliques ou autre, pour agir sur les moyens de sustentation du châssis de façon à maintenir une garde constante entre les dispositifs de coupe des plantes et le sol. Le châssis supporte au moins une voie de traitement des rangs de culture mais des variantes de l'invention peuvent comporter une pluralité de voies traitant chacune un rang de culture. Ainsi sur la figure 1 on peut voir une première voie (1) et une deuxième voie (2). Selon l'axe de symétrie de chaque voie est disposée dans le sens d'avancement de la machine une première paire de disques (11, 12, 21, 22) entraînés en rotation dans un sens d'avalement vers le plateau de la machine et vers les rails guide (13, 14) dont une des extrémités sont disposées au-dessus de ces disques. Par souci de simplification on appelle disque de centrage (11, 12, 21, 22) des troncs de cônes de faible épaisseur (2 à 15 cm par exemple) et dont l'axe de rotation est incliné de façon que la surface externe du tronc de cône soit tangente à proximité de chaque voie d'un plan vertical parallèle à l'axe de symétrie de chaque voie. Ainsi la circonférence inférieure (220, 210, 110, 120) de chaque tronc de cône sera à l'aplomb à proximité de l'axe de symétrie de la voie de la circonférence supérieure (221, 211, 111, 121). Ces rails (13, 14, 23, 24) comportent une partie évasée à l'entrée (231, 241, 131, 141). La partie évasée (231, 241, 131, 141) commence sensiblement au niveau de l'arrière des disques (211, 221). Cette partie évasée (231, 241, 131, 141) est inclinée vers l'avant de la machine, tangentielle à la partie supérieure des disques (21, 22) de centrage, comme représenté à la figure 2. La position des rails (23, 24) est réglable par des moyens connus pour s'adapter aux différents types de choux récoltés. Ainsi, à titre d'exemple non limitatif, ces rails (23, 24) peuvent être translatés verticalement, ou inclinés vers l'avant de la machine. Dans une autre variante (non représentée), cette partie évasée peut commencer au niveau de l'axe de symétrie joignant les deux axes des disques. Les disques sont montés de façon que leur axe de rotation soit incliné d'une part vers l'avant et d'autre part vers l'axe de symétrie de chaque voie (1, 2). L'angle d'inclinaison des axes de rotation est réglable par des moyens connus de l'homme de métier dans une plage comprise entre 0 et 30 degrés. Ces disques, par leur rotation et leurs inclinaisons, permettent de redresser les plants de choux et de les recentrer, lorsque ceux ci se trouvent décalés par rapport au rang de culture. Les guides (13, 14, 23, 24) viennent ensuite achever ce centrage et ce redressement de la plante, puis, par resserrement de ces guides vers l'axe de symétrie de la voie amener le plant à proximité des disques de sectionnement de chaque voie (15, 25) qui sont entraînés dans le sens d'avalement. Ces disques de sectionnement coupent complètement le trajet de chaque plant et se trouvent au-dessous d'un dispositif permettant la rupture et le cassage des feuilles des plants de choux. Ce dispositif est constitué d'un rail d'appui (26, 16) commençant par une partie évasée (261, 161) au-dessus du disque de sectionnement et en face de ce rail à une certaine distance une pluralité de bandes d'entraînement (27, 17) tendues entre deux galets (271, 171, 272, 172). L'écartement de ces rails d'appui (16, 26) est réglable par des moyens connus pour s'adapter aux différents diamètres des tiges des choux. Par exemple, des moyens élastiques (non représentés) peuvent assurer cet écartement adaptable. Le dispositif comporte également un troisième galet (273, 173) disposé entre les deux galets et placé à proximité de la partie rectiligne et souple en écartement du rail de guidage (26, 16). Ce galet intermédiaire (273, respectivement 173) est monté sur des moyens élastiques (274, 174) de façon à exercer avec la bande une pression sur la plante en la serrant contre le rail de guidage respectif (26, 16). L'un des galets (171, 172, 271, 272) est entraîné en rotation de façon à entraîner les bandes dans le sens d'avalement c'est-à-dire en sens inverse du sens de rotation des disques de sectionnement. La rotation de la bande (27, 17) et la pression de celle-ci sur les plantes exerce une force de déchirement qui provoque la rupture des feuilles entourant les choux. Un dispositif de ventilation (28, 18) constitué de buses de soufflage, situées après le disque de sectionnement (15, 25) et en dessous et sur le côté des guides (26, 16) de rupture des feuilles, permet l'évacuation des feuilles avant que la plante soit déversée sur un tapis (3) de convoyage. Sur la figure 2 on peut voir une variante de réalisation dans laquelle la machine comporte au-dessus de chaque guide d'accompagnement (23, 24 ; 13, 14) un tapis roulant (31) entraîné dans le sens d'avalement sur sa face inférieure qui dans l'exemple de réalisation figuré correspond au sens anti horaire. Ce tapis roulant (3) est disposé à une hauteur par rapport aux guides (23, 24) suffisante entre le guide (23, 13) et le tapis pour maintenir les choux et faciliter leur convoyage vers le disque de sectionnement (25). A l'extrémité du tapis de convoyage (3) disposée dans le sens d'entraînement se trouve également un deuxième système d'effeuillage permettant de s'assurer de l'achèvement total de l'effeuillage du chou avant de déverser le chou sur un tapis élévateur vers une trémie de stockage.

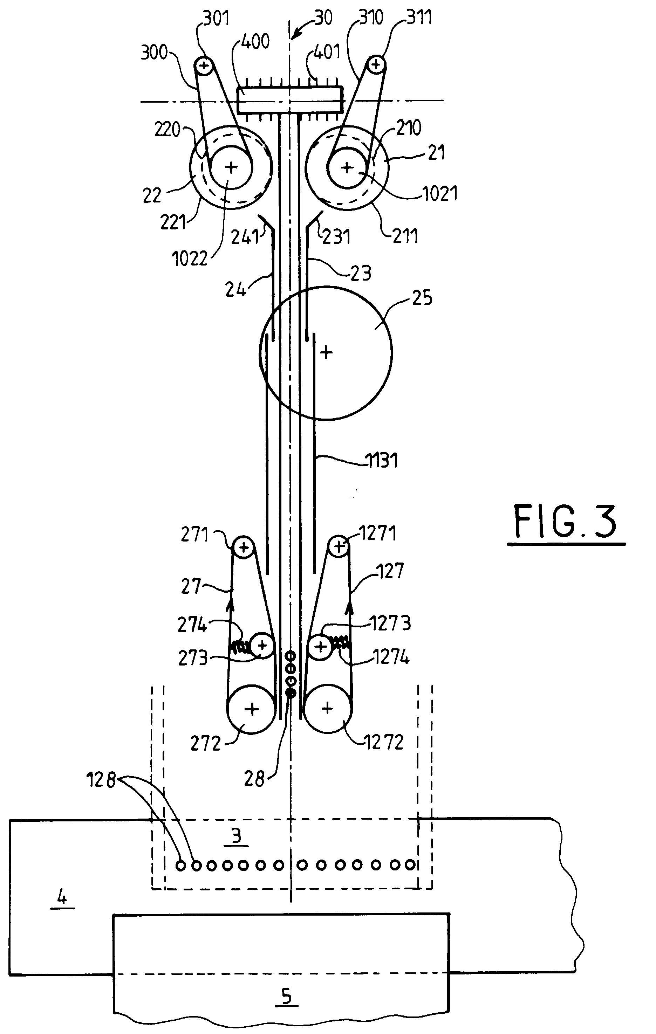

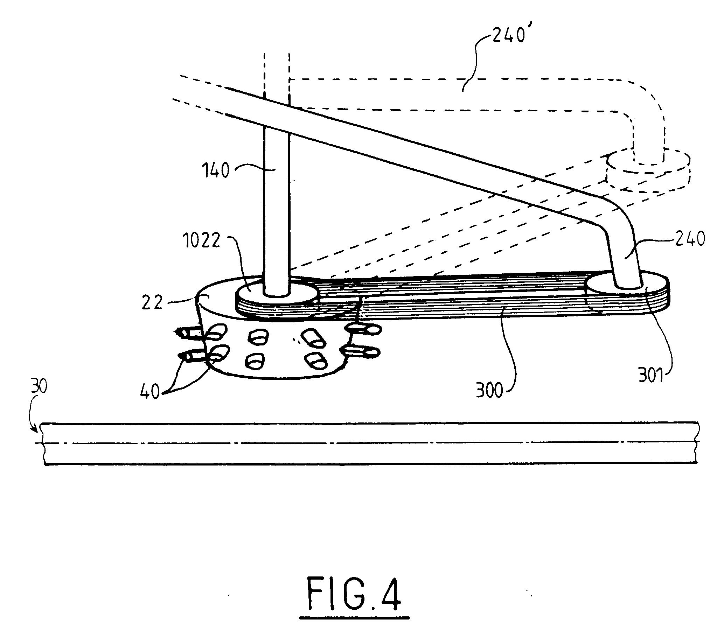

Les figures 3 et 5 représentent une voie de traitement (30), dans un autre mode de réalisation de l'invention. Dans ces figures, les éléments identiques à ceux décrits ci-dessus sont désignés par les mêmes références numériques. Selon l'axe de symétrie de la voie (30) est disposée, dans le sens d'avancement de la machine, une première paire de disques de centrage rotatifs (21, 22) à section trapézoïdale et disposés comme précédemment. Chacun de ces disques (21, 22) comporte sur sa base supérieure, une poulie (respectivement 1021 et 1022) solidaire en rotation du disque. L'axe de rotation de la poulie coïncide avec l'axe de rotation du disque (21, 22). Chaque poulie (1021, 1022) est associée à un galet (310, 311). Chacun des galets (301, 311) est disposé symétriquement de part et d'autre de la voie, à l'avant des disques (21, 22) dans le sens d'avancement. Les deux couples poulie-galet tendent chacun une courroie (300, 310) d'un côté de la voie (30). Ces deux courroies (300, 310) forment un étranglement en V vers l'entrée de la machine. Les disques (21, 22) sont entraînés en rotation dans un sens d'avalement vers le plateau de la machine. Simultanément, les poulies (1021, 1022), solidaires en rotation des disques, coopèrent avec les galets (301, 311) pour transmettre aux courroies (300,310) un mouvement de rotation dans le sens d'avalement. Les courroies (300, 310) opèrent un premier centrage et redressement des choux inclinés vers le sol, et les guident vers les disques (21, 22) qui poursuivent ce centrage et ce redressement. Au-dessus des courroies (300, 310), le système de cueillette des choux comporte des moyens de hachage et de lacération de la partie haute des feuilles des choux. Ces moyens de hachage de la partie haute des feuilles des choux sont constitués d'un cylindre (400) rotatif dont la surface périphérique est pourvue de doigts picots (401) tranchants dans le sens de rotation. Le cylindre (400) est disposé entre les deux courroies (300, 310), l'axe du cylindre perpendiculaire à l'axe de symétrie de la voie (30). Le cylindre (400) est entraîné en rotation autour de son axe, dans le sens d'avalement de la machine, par des moyens connus. Les doigts picots (401) du cylindre (400), tranchants dans le sens d'avalement, réalisent une lacération de la partie haute des feuilles des choux. Ces moyens (400, 401) de hachage de la partie haute des feuilles des choux peuvent être disposé plus en arrière dans la machine. De même, le mode de réalisation représenté aux figures 1 et 2 peut comporter des moyens (400, 401) de hachage de la partie haute des feuilles des choux. Avantageusement, la surface périphérique des disques (21, 22) de centrage et de redressement comporte également des doigts picots (40, figure 4) qui améliorent la prise et l'efficacité du guidage et du redressement. Les doigts picots (40) sont constitués de demi-cylindres dont la face plane est jointive d'un prisme à section triangulaire dont le sommet acéré est disposé dans le sens de rotation du disque (21, 22). En plus d'une meilleure prise, ces doigts picots (40) lacèrent les feuilles qui entourent les plants de chou. Cette lacération amorce l'effeuillage du chou en détachant des feuilles, et en fragilisant d'autres feuilles qui seront détachées plus facilement par le dispositif d'effeuillage situé à l'intérieur de la machine. Les doigts picots (401) du cylindre (400) réalisant le hachage et l'élimination de la partie haute des feuilles des choux peuvent être identiques aux doigts picots (40) des disques (21, 22). Les disques (21, 22) conduisent les choux vers les rails guide (23, 24) qui achèvent ce centrage et ce redressement. Les rails (23, 24), dont une des extrémités sont disposées au-dessus de ces disques, comportent une partie évasée à l'entrée (231, 241). Cette partie évasée (231, 241) commence au niveau de l'arrière des disques (21, 22), et elle est inclinée vers l'avant de la machine. Tout comme dans l'exemple de réalisation de des figures 1 et 2, la position de ces rails (23, 24) est réglable par des moyens connus. Ainsi, par exemple ces rails (23, 24) peuvent être translatés verticalement, ou inclinés vers l'avant de la machine. Ce réglage de position, réalisé par l'utilisateur, permet à la machine de s'adapter aux différents types de choux à récolter. Ces guides (23, 24) se resserrent ensuite vers l'axe de symétrie de la voie (30) et s'étendent parallèles à cette voie, en ménageant pour la partie parallèle un écartement suffisant pour permettre la suspension des choux par la tête. Tout comme dans la réalisation de la figure 2, la voie de traitement comporte, au-dessus de chaque guide (23, 24) un tapis roulant (31) (figure 5), entraîné dans le sens d'avalement sur sa face inférieure. Les guides (23, 24) et le tapis roulant (31) coopèrent pour amener le plant à proximité du disque de sectionnement (25). Ce disque de sectionnement (25) est placé à l'arrière des guides (23, 24). Mais ce disque de sectionnement (25) peut également être situé plus en avant sur la machine, par exemple à proximité de l'entrée, sous les rails guides (23, 24). Cette variante de positionnement du disque de sectionnement (25) peut s'appliquer également à la forme de réalisation des figures 1 et 2. Comme dans l'exemple décrit précédemment, le disque de sectionnement (25) est entraîné en rotation dans le sens d'avalement, son axe de rotation étant parallèle aux choux redressés. Ce disque (25) coupe complètement le trajet de chaque plant, en dessous des têtes ou pommes des choux. Après la coupe du pied réalisée par le disque (25), les choux coupés sont entraînés par un système d'élévation (1131) jusqu'au dispositif de cassage et de rupture de feuilles. Le système d'élévation (1131) est constitué de deux bandes enserrant le chou coupé et s'élevant le long de la voie (30) vers l'arrière de la machine. Le système d'élévation (1131) pourra être réalisé par tout autre moyen connu, par exemple deux rails de guidage enserrant le pied du chou sous sa tête, et coopérant avec un ou plusieurs tapis rotatifs dans le sens d'avalement. Le système d'élévation (1131) entraîne les choux coupés vers le haut et l'arrière de la voie (30) jusqu'au dispositif de cassage et de rupture de feuilles. Le dispositif de cassage et de rupture des feuilles des choux est constitué de deux séries de bandes d'entraînement (27, 127). Ces deux séries de bandes d'entraînement (27, 127) sont sensiblement parallèles et disposées symétriquement de part et d'autre de la voie (30) en dessous du cheminement des têtes de choux. Chacune de ces séries de bandes d'entraînement (27, 127) sont tendues par deux galets, respectivement (271, 272) et (1271, 1272). Le galet placé à l'avant (271, 1271) de chaque paire de galets tendeurs est réglable en position par des moyens connus. Un troisième galet (273, 1273) dit galet presseur est placé entre chacune des deux paires de galet tendeurs (271, 272; 1271, 1272), à proximité de l'axe de symétrie de la voie (30). Ces galets presseurs (273, 1273) sont montés sur des moyens élastiques respectivement (274) et (1274), de façon à exercer une pression sur la plante, en la serrant entre les deux séries de bandes (27, 127). Ces derniers (273, 1273) étant réglables en translation linéairement. L'un des galets de chaque paire de galets (271, 272; 1271, 1272) est entraîné en rotation de manière à entraîner chaque bande (27, 127) dans le sens d'avalement. C'est à dire que, d'un même côté de l'axe de symétrie de la voie, tous les galets tournent dans le même sens de rotation que le disque de centrage situé de ce même côté de l'axe de symétrie. De façon avantageuse, l'une (127) des deux bandes est entraînée avec une vitesse inférieure à celle de l'autre bande (27). De cette façon, les deux bandes (27, 127) entraînent les plants de choux en exerçant des frottements sur leur surface périphérique. Ces frottements provoquent la rupture des feuilles entourant les choux. La différence de vitesses entre les bandes, en plus des cisaillements exercés sur les choux, les fait tourner sur eux-mêmes dans leur progression vers l'arrière de la machine. Ceci assure un effeuillage efficace sur toute la périphérie des choux. Bien sûr il est possible de faire varier la différence des vitesses d'entraînement des bandes (27, 127). La différence des vitesses d'entraînement des deux bandes (27, 127) sera adaptée en fonction par exemple de la vitesse d'avancement de la machine, pour réguler le débit des choux traités. De même, il est possible d'entraîner une des deux bandes (127) dans le sens contraire au sens d'avalement de la machine, et l'autre bande (27) dans le sens d'avalement. On réglera alors les vitesses d'entraînement des deux bandes (27, 127) pour que la vitesse d'entraînement de la bande (127) tournant dans le sens contraire au sens d'avalement soit inférieure à la vitesse d'entraînement de l'autre bande (27). Dans ce cas, les galets des deux côtés de l'axe de symétrie de la voie tournent dans le même sens, qui est le sens de rotation de l'un des deux disques de centrage (21, 22). Dans cette configuration, on accentue le frottement exercé sur la périphérie des plants, et on ralentit la progression des choux vers l'arrière de la machine, entre les deux bandes. C'est à dire les choux sont soumis plus longtemps à l'effeuillage. Comme dans la réalisation décrite ci-dessus, la voie de traitement comporte un dispositif de ventilation. Celui-ci est constitué de buses de soufflage (28), situées sur l'axe de symétrie de la voie de traitement, et sous le dispositif de rupture de feuilles. Ce dispositif de ventilation (28) permet l'évacuation des feuilles avant que la plante ne soit déversée sur un tapis (3) de convoyage situé à l'arrière de la voie (30) et parallèle à celle-ci. La voie de traitement des choux comporte d'autres dispositifs de ventilation constitués de buses de soufflages (128) et disposées au-dessus ou en dessous du tapis de convoyage (3). Ces buses de soufflage (128) sont par exemple disposées régulièrement sous toute la largeur, et à l'arrière du tapis de convoyage (3) pour parfaire l'évacuation des feuilles sur un tapis incliné (5). Le soufflage (128) est orienté vers le tapis incliné (5) et plaque les feuilles coupées (33A) sur ce tapis (5). Les têtes de choux coupées (33B), arrivés à l'extrémité arrière du tapis de convoyage (3), tombent sur un autre tapis d'évacuation (4) disposé sous les deux tapis (3, 5) précédents. Dans l'exemple de réalisation des figures 3 et 5, le tapis de convoyage (3) ainsi que le tapis incliné (5) destiné à évacuer les feuilles sont sensiblement parallèles à la voie (30). Le tapis (4) destiné à l'évacuation des choux, situés sous les deux tapis précédents, est quant à lui sensiblement perpendiculaire à la voie (30). Mais cet exemple de disposition n'est nullement limitatif, les tapis (3, 4, 5) pourront être disposés d'une autre manière connue de l'homme du métier.

La figure 4 représente une vue en perspective d'un couple disque (22)-galet (301) qui tendent une courroie (300) d'un coté de la voie de traitement (30). Seul un couple disque-galet est représenté, le même dispositif se retrouvant, symétriquement, de l'autre côté de la voie (30). Le disque de centrage et de redressement (22) est constitué d'un tronc de cône se rétrécissant vers le sol, c'est à dire, vers le bas. La surface périphérique du disque (22) est pourvue de doigts picots (40) qui s'étendent perpendiculairement à cette surface. Les doigts picots (40) sont par exemple constitués de demi-cylindres dont la face plane est jointive d'un prisme à section triangulaire. Le bord acéré du prisme triangulaire est disposé dans le sens de rotation du disque (21, 22). Les doigts picots (40) sont fixés de manière connue sur la surface périphérique du tronc de cône (22). Les doigts picots (40) pourront également être constitués de dents coniques fixées par leur base sur le disque (21, 22). Ce disque de centrage et de redressement (22) est entraîné en rotation de façon connue, par un arbre (140) monté en rotation dans le châssis de la machine avec lequel il est solidaire. L'arbre (140) s'étend au-dessus du disque (22), l'axe de l'arbre étant confondu avec l'axe de rotation du disque (22). La base supérieure du disque (22) comporte une poulie (1022) centrée sur cette base, et solidaire en rotation du disque (22). Une courroie (300) est tendue entre cette poulie (1022) et un galet (301). Le galet (301) est maintenu parallèle à la poulie (1022), et dans le plan de celle-ci, au moyen d'un bras (240) monté sur le châssis de la machine par des moyens réglables permettant de régler la position angulaire du bras (240) par rapport à l'axe de la voie (30) de récolte. Le galet (301) est monté libre en rotation sur une extrémité de ce bras (240), son axe de rotation parallèle à l'axe de rotation du disque de centrage (22). Le bras (240) s'étend au-dessus du galet (301), son axe de symétrie confondu avec l'axe de rotation du galet (301). Puis le bras (240) est courbé vers le disque (22) et l'arrière de la voie (30). De même que dans l'exemple de réalisation de la figure 1, les moyens de centrage et de redressement (300, 310; 301, 311; 21, 22) peuvent être inclinés par rapport à la verticale. Cette inclinaison des axes de rotation, des disques (21, 22) et de galets (301, 311) peut permettre d'orienter les surfaces périphériques des troncs de cône des disques de centrage (21, 22). Notamment, les surfaces périphériques des disques (21, 22) pourront être orientées pour qu'elles soient tangentes, à proximité de chaque voie (30), d'un plan vertical parallèle à l'axe de symétrie de chaque voie. L'angle d'inclinaison des moyens de centrage et de redressement (300, 310; 301, 311; 21, 22) est réglable par des moyens connus de l'homme du métier, dans une plage comprise entre 0 et 30 degrés. En particulier, il peut être prévu un moyen de réglage unique et simultané des inclinaisons des axes de rotation des disques (21, 22) et des galets (301, 311) d'un même côté de la voie (30). De même, il est possible de faire varier l'angle entre la courroie (300) et l'axe de symétrie de la voie (30). La variation de cet angle est réalisée par des moyens connus de l'homme du métier, en faisant pivoter le bras (240) autour d'un axe parallèle à l'arbre d'entraînement (140) du disque (22). De cette façon, on fait varier l'étranglement en V décrit par les deux poulies (300, 310) situées de part et d'autre de la voie (30). Une autre position de ce bras référencé (240') est représentée en pointillés à la figure 4. Dans cette autre position, le galet (301'), fixé à l'extrémité du bras (240'), a été éloigné de la voie (30) par pivotement du bras (240) vers l'extérieur de la voie (30). Ainsi, on réalise un étranglement en V avec les courroies (300, 310), dont l'angle du V est plus grand. Bien sûr, le dispositif de centrage et de redressement ne se limite pas à cet exemple de réalisation, d'autres formes de réalisations connues de l'homme du métier entrent dans le cadre de l'invention.

Il est aussi possible de réaliser une voie de traitement représentée aux figures 3 et 5, sans le système d'élévation (1131). Dans ce cas, le disque de sectionnement (25) pourra être disposé sous le dispositif de cassage et de rupture des feuilles des choux, comme dans le mode de réalisation de la figure 1. De même, les variantes consistant à introduire un système d'élévation (1131) dans les modes de réalisation des figures 1 et 2 entrent dans le cadre de l'invention.

Le système selon l'invention permet donc d'assurer de façon automatique la récolte des choux en assurant à la fois le recentrage et le redressement des plants sans endommager le chou qui se trouve au-dessus. Le dispositif permet également le sectionnement à hauteur constante par rapport à la plante et la rupture des feuilles qui entourent le chou sans détériorer le chou lui-même qui est particulièrement fragile. Le sens d'avalement est défini comme étant le sens de rotation dans lequel le plant est entraîné en direction du tapis convoyeur (3).

Les disques, tapis, ventilateurs et autres éléments mobiles du système sont actionnés soit par un fluide fourni par une ou plusieurs pompes entraînées par la prise de force du tracteur ou par des moteurs électriques ou thermiques ou tout autre moyen équivalent.

D'autres modifications à la portée de l'homme de métier font également partie de l'esprit de l'invention.

## Revendications

1. Système de cueillette de choux caractérisé en ce qu'il comporte au moins une voie (1, 2) de cueillette qui est constituée par:
des moyens (12, 11 ; 21, 22) de centrer et redresser les plants de choux;
des guides (23, 24 ; 13, 14) d'accompagnement des plantes ;
des moyens (15, 25) de sectionnement des feuilles et des tiges des choux à une hauteur réglable par rapport au sol, l'ensemble étant monté sur un châssis pourvu de moyens réglables (29) de conservation d'une garde au sol.

2. Système de cueillette de choux selon la revendication 1, caractérisé en ce que le système comporte au-dessus des moyens (15, 25) de sectionnement, des moyens de rupture des feuilles et des moyens (27, 17) de ventilation (18, 28) pour éliminer les feuilles avant convoyage par un tapis convoyeur (3).

3. Système de cueillette de choux selon la revendication 1 ou 2, caractérisé en ce que les moyens de centrage et de redressement sont constitués par deux disques (21, 22 ; 11, 12) rotatifs tournant dans le sens d'avalement par rapport à l'entrée évasée des moyens d'accompagnement (23, 24 ; 13, 14).

4. Système de cueillette de choux selon la revendication 3, caractérisé en ce que les disques (21, 22 ; 11, 12) sont disposés inclinés de façon que l'axe de symétrie confondu avec l'axe de rotation des disques flasques soit d'une part incliné vers l'avant et d'autre part vers l'axe de symétrie de la voie de cueillette.

5. Système de cueillette de choux selon la revendication 1 ou 2, caractérisé en ce que les moyens de centrage et de redressement sont constitués par deux troncs de cône (21, 22 ; 11, 12) rotatifs, de faible épaisseur, tournant dans le sens d'avalement par rapport à l'entrée évasée des moyens d'accompagnement (23, 24 ; 13, 14), et dont l'axe de rotation, confondu avec l'axe de symétrie est incliné de façon que la surface externe du tronc de cône soit tangente, à proximité de chaque voie, d'un plan vertical parallèle à l'axe de symétrie de chaque voie.

6. Système de cueillette de choux selon la revendication 4 ou 5, caractérisé en ce que l'angle d'inclinaison selon les deux directions est réglable dans une plage de 0 à 30 degrés.

7. Système de cueillette de choux selon la revendication 1, caractérisé en ce que les moyens d'accompagnement sont constitués de deux rails (23, 24 ; 13, 14) convergeant de l'axe de symétrie des disques vers le chemin d'accompagnement qui se prolonge par un tronçon parallèle au-dessus duquel un tapis (31) rotatif est entraîné dans le sens d'avalement.

8. Système de cueillette de choux selon une des revendications 1 à 7, caractérisé en ce que les moyens de sectionnement sont constitués par un disque (15, 25) de coupe entraîné dans le sens d'avalement et disposé sur chaque voie (1, 2) de cueillette.

9. Système de cueillette de choux selon une des revendications 1 à 8, caractérisé en ce que les moyens de rupture des feuilles sont constitués par un guide (26, 16) disposé parallèlement à la voie au-dessus des moyens de sectionnement et un ensemble de bandes (17, 27) de pression entraînées en rotation en sens inverse du sens de la roue de sectionnement à hauteur du guide.

10. Système de cueillette de choux selon la revendication 9, caractérisé en ce que les bandes (17, 22) sont tendues entre un premier (271, 171) et un second (272, 172) galets dont le premier galet, placé à l'avant, est réglable en position, un troisième galet (273, 173) dit presseur, disposé à proximité du guide entre le premier et le second galet, est monté sur des moyens élastiques (274, 174) pour définir une partie de trajet parallèle à la voie et une partie de trajet convergeante entre le premier galet et le troisième galet.

11. Système de cueillette de choux selon la revendication 10, caractérisé en ce que des moyens de ventilation (28, 18) sont disposés sous et sur le côté de la voie de guidage, avant la sortie et/ou à la sortie des moyens de rupture des feuilles, pour éliminer les feuilles avant l'arrivée des choux sur le tapis convoyeur (3).

12. Système de cueillette de choux selon une des revendications 1 à 11, caractérisé en ce qu'à la sortie du tapis de convoyage le système comporte un second dispositif d'effeuillage et un tapis élévateur vers une trémie de stockage.

13. Système de cueillette de choux selon la revendication 11 ou 12, caractérisé en ce que le système de cueillette comporte une pluralité de voies (1, 2) de cueillette.

14. Système de cueillette de choux selon la revendication 13, caractérisé en ce que le système de réglage de la garde au sol est constitué de moyens de détection (29) de la distance au sol et de moyens agissant sur le châssis de support des différents moyens du système pour faire varier la garde au sol en fonction du signal fourni par les moyens (29) de détection.

15. Système de cueillette de choux selon la revendication 14, caractérisé en ce que les moyens agissant sur le châssis de support des différents moyens du système pour faire varier la garde au sol du disque de sectionnement sont choisis parmi les moyens suivants : des moyens hydrauliques, des moyens mécaniques.

16. Système de cueillette de choux selon une des revendications 11 à 15, caractérisé en ce que les différents disques, tapis et éléments mobiles du système monté sur le châssis sont actionnés par un fluide fourni par au moins une pompe, entraînée par au moins un moteur.

17. Système de cueillette de choux comportant au moins une voie (1, 2) de cueillette qui est constituée par :
des moyens (12, 11 ; 21, 22) de centrer et redresser les plants de choux;
des guides (23, 24 ; 13, 14) d'accompagnement des plantes ;
des moyens (15, 25) de sectionnement des feuilles et des tiges des choux à une hauteur réglable par rapport au sol, l'ensemble étant monté sur un châssis pourvu de moyens réglables (29) de conservation d'une garde au sol;
caractérisé en ce que les moyens de centrage et de redressement sont constitués par deux disques (21, 22 ; 11, 12) rotatifs, tournant dans le sens d'avalement par rapport à l'entrée évasée des moyens d'accompagnement (23, 24 ; 13, 14).

18. Système de cueillette de choux selon une des revendications 1 ou 2, caractérisé en ce que les moyens de centrage et de redressement sont constitués de deux courroies (300, 310) tendues chacune d'un côté de la voie (30), entre une poulie (1021, 1022) solidaire en rotation d'un disque (21, 22) rotatif tournant dans le sens d'avalement par rapport à l'entrée évasée des moyens d'accompagnement (23, 24), et un galet (301, 311), les courroies (300, 310) décrivant un étranglement en V à l'entrée de la machine.

19. Système de cueillette de choux selon l'une des revendications 1 à 18 caractérisé en ce qu'il comporte des moyens (400,401) de hachage et d'élimination de la partie haute des feuilles des choux.

20. Système de cueillette de choux selon la revendication 19 caractérisé en ce les moyens (400, 401) de hachage et d'élimination de la partie supérieure des feuilles des choux sont constitués d'au moins un cylindre (400) rotatif dans le sens d'avalement et pourvu, sur sa surface périphérique, de doigts picots (401) tranchants dans le sens d'avalement, le cylindre (400) étant disposé au-dessus des moyens de centrage et de redressement, l'axe du cylindre (400) étant perpendiculaire à l'axe de symétrie de la voie (30) de traitement.

21. Système de cueillette de choux selon la revendication 18 caractérisé en ce que les disques (21, 22) sont constitués de tronc de cône se rétrécissant vers le sol, et pourvus sur leur surface périphérique de doigts picots (40), tranchants dans le sens de rotation, qui s'étendent perpendiculairement à cette surface périphérique.

22. Système de cueillette de choux selon la revendication 18 ou 21 caractérisé en ce que chaque disque de centrage et de redressement (21, 22) est entraîné en rotation par un arbre (140) avec lequel il est solidaire, l'arbre (140) s'étendant au-dessus du disque (22), son axe confondu avec l'axe de rotation du disque (22), chaque poulie (1021, 1022) étant centrée sur la base supérieure d'un disque (21, 22), chaque galet (301, 311) étant maintenu parallèle sa poulie (1021, 1022), et dans le plan de celle-ci, au moyen d'un bras (240), chaque bras (240) s'étendant perpendiculairement au-dessus du galet (301), puis se courbant vers le disque (21, 22) et l'arrière de la voie (30).

23. Système de cueillette de choux selon la revendication 22, caractérisé en ce que chaque bras (240) peut pivoter autour d'un axe parallèle à l'arbre d'entraînement (140), pour déplacer le galet (301, 311) et faire varier l'angle entre la courroie (300, 310) et l'axe de symétrie de la voie (30), cette variation d'angle modifiant l'étranglement en V décrit par les deux courroies (300, 310) situées de part et d'autre de la voie (30).

24. Système de cueillette de choux selon une des revendications 18 et 21 à 23 caractérisé en ce que les moyens de centrage et de redressement (300, 310; 301, 311; 21, 22) sont inclinés de façon que la surface externe du tronc de cône des disques de centrage et de redressement (21, 22) soit tangente, à proximité de chaque voie (30), d'un plan vertical parallèle à l'axe de symétrie de chaque voie.

25. Système de cueillette de choux selon une des revendications 1 à 9, 18 à 23 caractérisé en ce que des moyens de rupture de feuilles sont constitués de deux séries de bandes d'entraînement (27, 127), sensiblement parallèles et disposées symétriquement, de part et d'autre de la voie (30), chacune de ces deux séries de bandes d'entraînement (27, 127) étant tendue entre un premier (271, 1271) et un second (272, 1272) galets dont le premier galet, placé à l'avant, est réglable en position, de façon à ce que la plante soit serrée entre les deux séries de bandes (27, 127), les deux séries de bandes (27, 127) étant entraînées en rotation dans le sens d'avalement avec des vitesses différentes et réglables.

26. Système de cueillette de choux selon une des revendications 1 à 9 et 18 à 25 caractérisé en ce que les moyens de rupture de feuilles sont constitués de deux séries de bandes d'entraînement (27, 127), sensiblement parallèles et disposées symétriquement, de part et d'autre de la voie (30), chacune de ces deux séries de bandes d'entraînement (27, 127) étant tendues entre un premier (271, 1271) et un second (1271, 1272) galets dont le premier galet, placé à l'avant, est réglable en position, de façon à ce que la plante soit serrée entre les deux séries de bandes (27, 127), une des deux séries de bandes (127) étant entraînée en rotation dans le sens inverse au sens d'avalement de la machine, l'autre série de bandes (27) étant entraînée dans le sens d'avalement, la vitesse d'entraînement de chacune des deux séries de bandes (27, 127) étant réglables, la vitesse d'entraînement de la bande (127) tournant dans le sens contraire au sens d'avalement étant inférieure à la vitesse de la bande (27) tournant dans le sens d'avalement.

27. Système de cueillette de choux selon une des revendications 25 ou 26 caractérisé en ce que un troisième galet presseur (273, 1273) est placé entre au moins une des deux paires de galets tendeurs (271, 272; 1271, 1272), à proximité de l'axe de symétrie de la voie, ces galets presseurs (273, 1273) étant montés sur des moyens élastiques respectivement (274) et (1274), de façon à exercer une pression sur la plante en la serrant entre les deux séries de bandes (27, 127).

28. Système de cueillette de choux selon les revendications 1,2, 4 à 8 et 18 à 27, caractérisé en ce que les moyens (15, 25) de sectionnement sont placés à l'avant de la machine, sous les rails guides (13, 14; 23, 24), et en ce que le système comporte, à l'arrière des rails guides (13, 14; 23, 24), des moyens d'élévation (1131) des choux coupés jusqu'au dispositif de cassage et de rupture de feuilles, et en ce qu'il comporte des moyens de soufflage (128) disposés sur ou/et sous le tapis de convoyage (3), les moyens de soufflage (128) évacuant les feuilles coupées (33A) sur un tapis incliné (5), les têtes de choux (33B) arrivées à l'extrémité du tapis de convoyage (3) tombant sur un tapis d'évacuation (4) des choux coupés, le tapis d'évacuation (4) des choux étant disposé sous les deux tapis (3, 5) précédents.

29. Système de cueillette de choux selon les revendications 1,2 4 à 8, et 18 à 27, caractérisé en ce que les moyens (15, 25) de sectionnement sont placés à l'avant de la machine, sous les rails guides (13, 14; 23, 24), et en ce que le système comporte des moyens de rupture des feuilles et des moyens (27, 17, 127) de ventilation (18, 28) pour éliminer les feuilles avant convoyage par un tapis convoyeur (3), les moyens de rupture de feuilles (17, 27, 127) et les moyens de ventilation (18, 28) étant disposés dans le prolongement des rails guides (23, 24), à l'arrière de la machine.

30. Système de cueillette de choux selon la revendication 14 caractérisé en ce que les moyens de détection (29) de la distance au sol sont choisis parmi les moyens suivants : des moyens optiques, des moyens mécaniques, des moyens hydrauliques.

31. Système de cueillette de choux selon la revendication 14 caractérisé en ce que les moyens de détection (29) de la distance au sol sont constitués d'une roue ou d'un tambour de jauge en appui sur le sol.
